(19)

**Europäisches Patentamt**
**European Patent Office**
**Office européen des brevets**

(11)  **EP 1 396 704 B1**

(12)  # EUROPÄISCHE PATENTSCHRIFT

(45) Veröffentlichungstag und Bekanntmachung des Hinweises auf die Patenterteilung:
**07.10.2015  Patentblatt 2015/41**

(51) Int Cl.:
***G01D 5/38*** *(2006.01)*

(21) Anmeldenummer: **03016538.5**

(22) Anmeldetag: **23.07.2003**

(54) **Interferenzielle Positionsmesseinrichtung**

Interferential position measuring device

Dispositif interferentiel de mesure de position

(84) Benannte Vertragsstaaten:
**AT BE BG CH CY CZ DE DK EE ES FI FR GB GR HU IE IT LI LU MC NL PT RO SE SI SK TR**

(30) Priorität: **07.08.2002  DE 10236230**

(43) Veröffentlichungstag der Anmeldung:
**10.03.2004  Patentblatt 2004/11**

(73) Patentinhaber: **Dr. Johannes Heidenhain GmbH 83292 Traunreut (DE)**

(72) Erfinder:
- **Holzapfel, Wolfgang 83119 Obing (DE)**
- **Hermann, Michael 83342 Tacherting (DE)**
- **Huber, Walter 83278 Traunstein (DE)**
- **Höfer, Volker 83301 Traunreut (DE)**
- **Benner, Ulrich 83308 Trostberg (DE)**
- **Sändig, Karsten 83349 Palling (DE)**

(56) Entgegenhaltungen:
EP-A- 0 446 691          EP-A- 1 085 291
DE-A1- 19 701 941        US-A- 5 079 418
US-A- 5 574 558          US-A- 5 760 959
US-A- 5 812 320          US-A- 6 005 667

- WILLHELM J: "Dreigitterschrittgeber" VON DER FAKULTAET FUER MASCHINENWESEN DER TECHNISCHEN UNIVERSITAET HANNOVER ZUR ERLANGUNG DES AKADEMISCHEN GRADES DOKTOR-INGENIEUR GENEHMIGTE DISSERTATION, XX, XX, 1978, Seiten 47-51, XP002327534

EP 1 396 704 B1

**Beschreibung**

Die vorliegende Erfindung betrifft eine interferenzielle Positionsmesseinrichtung.

Zur präzisen Positionsbestimmung sind interferenzielle Positionsmesseinrichtungen bekannt, welche Beugungserscheinungen an Gittern zur Erzeugung hochauflösender, positionsabhängiger Abtastsignale nutzen. Bei einer Bewegung eines Maßstabgitters relativ zu einer Abtasteinheit resultieren in den Teilstrahlenbündeln mit abgelenkten Beugungsordnungen Phasenverschiebungen, die proportional zur Wegänderung sind. Zur Auswertung bzw. Erfassung der jeweiligen Phasenverschiebungen werden die unterschiedlichen, aufgespaltenen Teilstrahlenbündel bzw. Beugungsordnungen überlagert und zur Interferenz gebracht. Im Fall einer Bewegung resultiert eine periodische Modulation des Interferenzstreifenmusters, die mittels einer geeigneten optoelektronischen Detektoranordnung erfasst wird. Im Zusammenhang mit derartigen interferenziellen Positionsmesseinrichtungen sei etwa auf Kap. 4, S. 47 - 52 der Dissertation "Dreigitterschrittgeber" von J.Willhelm, 1978 verwiesen.

Eine weitere Variante interferenzieller Positionsmesseinrichtungen ist aus Figur 13 der US 6,005,667 bekannt. Ein von einer Lichtquelle emittiertes Strahlenbündel trifft nach einer Strahlformung über eine Linse auf ein Maßstabgitter, welches im Bereich der Strahltaille des umgeformten Strahlenbündels angeordnet ist. Vom Maßstabgitter wird das einfallende Strahlenbündel in die +/- 1. Beugungsordnungen bzw. in entsprechende Teilstrahlenbündel aufgespalten, die sich von der optischen Achse weg ausbreiten. Die Teilstrahlenbündel gelangen anschließend auf weitere beugende Abtastgitter, die die einfallenden Teilstrahlenbündel wieder in Richtung der optischen Achse zurück ablenken. In einer Detektionsebene, in der die Teilstrahlenbündel zur Interferenz kommen, ist ein Detektionsgitter angeordnet, welches vier phasenverschobene Teilbereiche aufweist, um am nachgeordneten Detektorelement vier, um jeweils 90° phasenverschobene Abtastsignale zu erzeugen.

Ergänzend sei an dieser Stelle auf die Druckschriften US 5,574,558 verwiesen, die eine weitere interferenzielle Positionsmesseinrichtung offenbart.

Als grundsätzlich kritisch erweisen sich bei derartigen hochauflösenden Positionsmesseinrichtungen die Anforderungen an die Anbautoleranzen. Das heißt, die Anbautoleranzen sind in der Regel sehr gering, was wiederum einen hohen Montage- und Justageaufwand verursacht. Hinzu kommen Forderungen nach einem möglichst klein bauenden System, insbesondere einer möglichst klein bauenden Abtasteinheit und einer möglichst weitgehenden Verschmutzungsunempfindlichkeit. Wichtig ist bei derartigen Positionsmesseinrichtungen grundsätzlich eine möglichst gute Qualität der resultierenden Abtastsignale, insbesondere wenn eine elektronische Weiterverarbeitung, z.B. eine Interpolation derselben, vorgesehen ist. Keine der interferenziellen Positionsmesseinrichtungen aus den zitierten Druckschriften erfüllt sämtliche angegebenen Anforderungen jedoch in zufriedenstellender Art und Weise.

So weist etwa das bekannte System aus der US 6,005,667 trotz einer gewissen Unempfindlichkeit gegenüber Dejustierungen von Maßstabgitter und Abtasteinheit nach wie vor eine hohe Anfälligkeit gegenüber Verschmutzungen des Maßstabgitters auf.

Als nachteilig an der bekannten Vorrichtung aus der US 5,574,558 wäre zu erwähnen, dass dieses eine große Empfindlichkeit gegnüber Schwankungen des Abstandes zwischen den zwei zueinander beweglichen Gittern aufweist, d.h. insbesondere in dieser Richtung liegen nur geringe Anbautoleranzen vor. Verursacht wird dies durch das divergierende bzw. nicht-kollimierte Beleuchtungsstrahlenbündel, welches auf das erste Gitter trifft.

Aus der EP 1 085 291 A2 ist eine Vorrichtung zur Positionsbestimmung und Ermittlung von Führungsfehlern bekannt, die auf einem interferenziellen Messprinzip basiert. Nach der Aufspaltung des von einer Lichtquelle emittierten Strahlenbündels über eine Abtastteilung gelangen die aufgespaltenen Teilstrahlenbündel ein erstes Mal auf einen Maßstab und werden von dort in Richtung einer Retroreflexions-Baueinheit reflektiert. Diese lenkt die Teilstrahlenbündel dann ein zweites Mal auf den Maßstab, bevor die Teilstrahlenbündel schließlich wieder auf die Abtastteilung treffen und zur Interferenz gelangen. Von der Abtastteilung schließlich propagieren interferierende Teilstrahlenbündel in unterschiedlichen Raumrichtungen zu Detektorelementen, wo im Fall der Relativbewegung von Maßstab und Abtasteinheit phasenverschobene Inkrementalsignale anliegen. Auch diese Vorrichtung weist die bereits oben diskutierten Nachteile hinsichtlich Verschmutzungsempfindlichkeit und geringer Anbautoleranzen auf.

Ähnlich verhält es sich mit der US 5,079,418; die daraus bekannte Vorrichtung nutzt ein zur EP 1085 291 A2 entsprechendes Abtastprinzip.

Auch die Vorrichtung aus der US 5,760,959 besitzt die diskutierten Nachteile. Der Abtaststrahlengang dieser Positionsmesseinrichtung sieht eine Aufspaltung des von einer Lichtquelle emittierten Strahlenbündels an einer ersten Abtastteilung vor, die aufgespaltenen Teilstrahlenbündel gelangen dann auf einen Maßstab, bevor nach der Überlagerung an einer weiteren Abtastteilung schließlich interferierende Strahlenbündel in Richtung mehrerer Detektoren propagieren.

Ebenso weist die aus der US 5,812,320 bekannte interferenzielle Positionsmesseinrichtung die erwähnten Nachteile hinsichtlich Verschmutzungsempfindlichkeit und geringer Anbautoleranzen auf. In der Ausführungsform gemäß Figur 44 wird ein kollimiertes Strahlenbündel an einem ersten Gitter in zwei Teilstrahlenbündel aufgespalten. Die Teilstrahlenbündel gelangen dann auf das Maßstabgitter und interferieren in einem bestimmten Raumbereich hinter dem Maßstabgitter, wo eine Detektoranordnung bestehend aus mehreren Detektorelementen platziert ist.

Aufgabe der vorliegenden Erfindung ist es daher, eine hochauflösende interferenzielle Positionsmesseinrichtung zu schaffen, die große Anbautoleranzen besitzt, möglichst verschmutzungsunempfindlich ist und einen kompakten Aufbau ermöglicht.

Diese Aufgabe wird gelöst durch eine interferenzielle Positionsmesseinrichtung mit den Merkmalen des Anspruches 1.

Ferner wird diese Aufgabe gelöst durch eine interferenzielle Positionsmesseinrichtung mit den Merkmalen des Anspruches 2.

Vorteilhafte Ausführungsformen der erfindungsgemäßen interferenziellen Positionsmesseinrichtungen ergeben sich aus den Maßnahmen, die in den von Anspruch 1 bzw. Anspruch 2 abhängigen Patentansprüchen aufgeführt sind.

Als Vorteil der erfindungsgemäßen Lösungen ist zunächst anzuführen, dass insbesondere im Fall der Ausbildung als rotatorische Positionsmesseinrichtung große Anbautoleranzen hinsichtlich der Lage der Teilscheibe mit dem Maßstabgitter resultieren. Es liegen große Anbautoleranzen sowohl in radialer bzw. tangentialer Richtung wie auch in axialer Richtung vor. Der Aufwand bei der Montage der Positionsmesseinrichtung lässt sich damit deutlich reduzieren.

Des weiteren besitzen die über die erfindungsgemäßen interferenziellen Positionsmesseinrichtungen erzeugten Abtastsignale einen relativ geringen Anteil an unerwünschten Oberwellen, d.h. es liegen qualitativ gute Abtastsignale vor. Messfehler bei der elektronischen Signal-Weiterverarbeitung können deshalb minimiert werden.

Ferner ist zu erwähnen, dass sich auf Grundlage der erfindungsgemäßen Überlegungen kompakt bauende Gesamtsysteme realisieren lassen, die auch unter beengten Einbauverhältnissen einsetzbar sind.

Auch die Anforderungen hinsichtlich Verschmutzungsunempfindlichkeit sind aufgrund der realisierten sog. Einfeldabtastung erfüllt. Dies bedeutet, dass im Fall einer eventuellen Verschmutzung des Maßstabgitters stets alle erzeugten phasenverschobenen Abtastsignale gleichmäßig beeinflusst werden und deshalb keine größeren Fehler bei der Signalweiterverarbeitung auftreten.

Die erfindungsgemäßen interferenziellen Positionsmesseinrichtungen können selbstverständlich sowohl als rotatorische wie auch als lineare Positionsmesseinrichtungen ausgebildet werden. Des weiteren ist es möglich, außer Durchlicht-Systemen auch Auflicht-Systeme auf Grundlage der erfindungsgemäßen Überlegungen zu realisieren.

Weitere Vorteile sowie Einzelheiten der vorliegenden Erfindung ergeben sich aus der nachfolgenden Beschreibung von Ausführungsbeispielen anhand der beiliegenden Figuren.

Dabei zeigt

Figur 1    eine schematisierte Darstellung des entfalteten Abtastrahlenganges einer ersten Ausführungsform der erfindungsgemäßen interferenziellen Positionsmesseinrichtung;

Figur 2    eine schematische Darstellung des Strahlverlaufes von der Lichtquelle bis zum Maßstabgitter;

Figur 3    eine schematisierte räumliche Teil-Darstellung einer rotatorischen Ausführungsform einer erfindungsgemäßen interferenziellen Positionsmesseinrichtung mit einem Abtaststrahlengang gemäß Figur 1;

Figur 4    eine schematisierte Darstellung des Abtastrahlenganges einer zweiten Variante der erfindungsgemäßen interferenziellen Positionsmesseinrichtung;

Figur 5    eine Darstellung der Detektoranordnung der Positionsmesseinrichtung aus Figur 4 in Verbindung mit dem damit abgetasteten Interferenzstreifenmuster;

Figur 6    eine schematisierte räumliche Teil-Darstellung einer rotatorischen Ausführungsform der erfindungsgemäßen interferenziellen Positionsmesseinrichtung mit einem Abtaststrahlengang gemäß Figur 4.

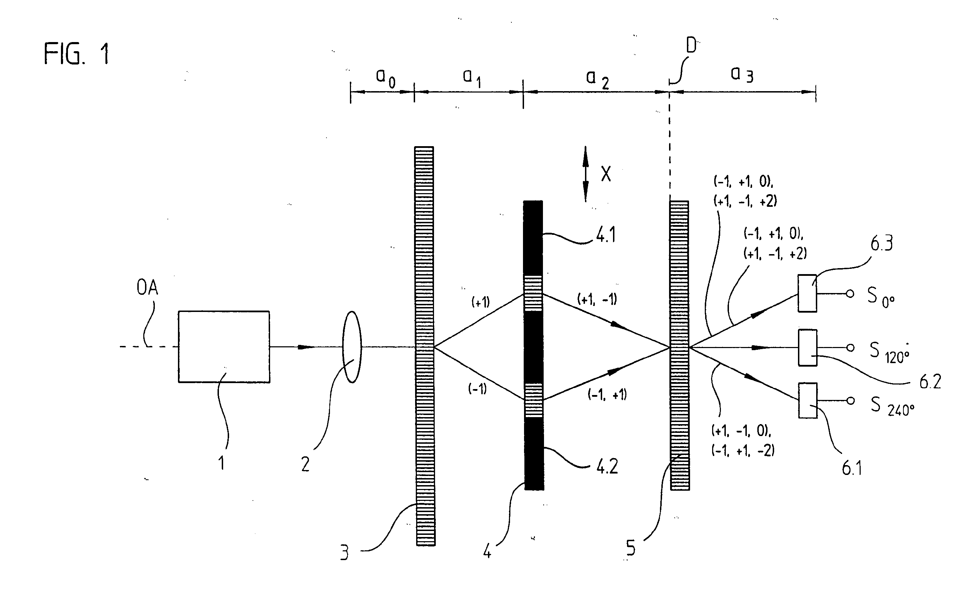

Anhand der Figuren 1 - 3 sei zunächst eine erste Variante der erfindungsgemäßen Positionsmesseinrichtung erläutert. Figur 1 zeigt hierbei in schematisierter Form den entfalteten Abtastrahlengang der Positionsmesseinrichtung. Die Positionsmesseinrichtung dient zur hochpräzisen Bestimmung der Relativposition zweier Objekte, die in mindestens einer Messrichtung zueinander beweglich sind. In der schematischen Prinzip-Darstellung der Figur 1 sei über den Pfeil eine lineare Verschiebung in Messrichtung x des Maßstabgitters 3 gegenüber den restlichen Elementen 1, 2, 4, 5, 6 angedeutet, die in einer Abtasteinheit angeordnet sind. Mit einem der beiden Objekte ist demzufolge das Maßstabgitter 3 verbunden, mit dem anderen der Objekte zumindest eine Lichtquelle 1 und die Abtastgitter 4.1, 4.2 der Abtastplatte 4. Wie anhand der folgenden Erläuterungen ersichtlich wird, kann anstelle einer linearen Messrichtung selbstverständlich auch eine rotatorische Messrichtung vorgesehen sein, wenn sich etwa zwei Objekte relativ zueinander um eine Rotationsachse drehen und die winkelmäßige Relativposition der beiden Objekte bzgl. der Rotationsachse zu bestimmen ist.

Im folgenden wird anhand von Figur 1 der grundsätzliche Abtaststrahlengang zur Erzeugung der verschiebungsabhängigen Abtastsignale erläutert.

Von einer Lichtquelle 1, beispielsweise ausgebildet als Halbleiter-Lichtquelle in Form einer Laserdiode bzw. eines sog. VCSEL (Vertical Cavity Surface Emitting Laser), wird ein Strahlenbündel emittiert, das sich entlang der Richtung einer optischen Achse OA ausbreitet. Im wesentlichen handelt es sich beim emittierten Strahlenbündel vorzugsweise um eine TEM 00 Mode eines Gauß'schen Strahles, der von dem als Lichtquelle 1 verwendeten VCSEL emittiert wird. Das von der Lichtquelle 1 emittierte Strahlenbündel weist aufgrund der VCSEL-Abstrahlcharakteristik eine bestimmte Divergenz auf und wird mittels eines Optikelementes 2 umgeformt, das der Lichtquelle 1 in Strahlausbreitungsrichtung nachgeordnet ist; als Optikelement 2 ist im vorliegenden Beispiel eine einzelne Linse vorgesehen. Alternativ hierzu könnte zur Strahlumformung auch komplexere Linsensysteme, Spiegelsysteme, Fresnellinsen, GRIN-Linsen etc. in Betracht kommen.

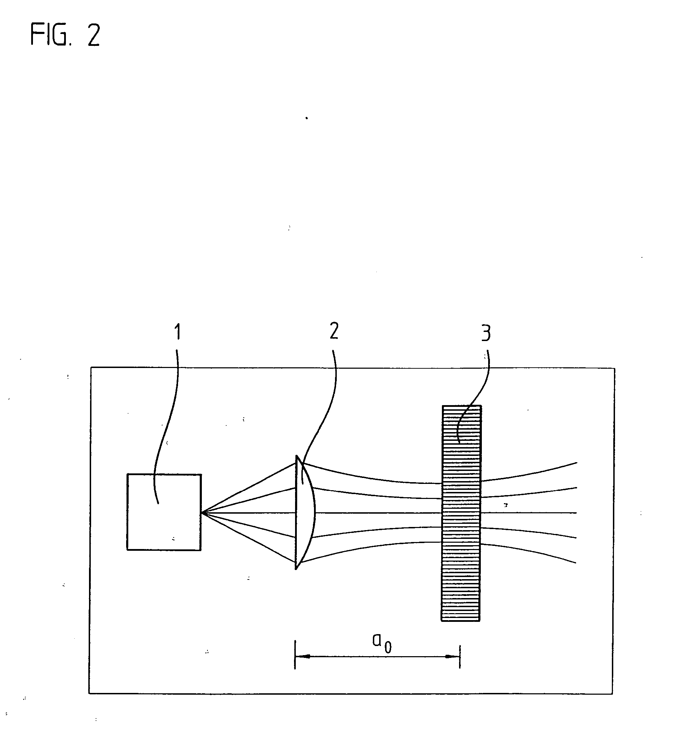

Die Strahlumformung des emittierten, divergenten Strahlenbündels erfolgt vorzugsweise dergestalt, dass nach dem Optikelement 2 ein annähernd kollimiertes Strahlenbündel vorliegt, das in einem bestimmten Abstand $a_0$ vom Optikelement 2 eine Strahltaille besitzt. Als Strahltaille sei in diesem Zusammenhang diejenige Stelle im Strahlquerschnitt entlang der Strahlausbreitungsrichtung verstanden, an der das Strahlenbündel seine minimalste Fläche bzw. Querausdehnung besitzt. Zur Erläuterung sei an dieser Stelle ergänzend auf die Figur 2 verwiesen, die die Form des Strahlenbündels vor und nach der Strahlumformung zeigt. Wie sowohl aus Figur 2 als auch aus Figur 1 ersichtlich, ist im Bereich der Strahltaille im Abstand $a_0$ vom Optikelement 2 entfernt ein Maßstabgitter 3 angeordnet, auf welches das umgeformte Strahlenbündel auftrifft. Die Anordnung des Maßstabgitters 3 an dieser Stelle hat den Vorteil, dass dadurch die Anbautoleranz, sowohl in radialer bzw. tangentialer Richtung wie auch in Richtung der Strahlausbreitung, also in axialer Richtung, vergrößert wird. Grundsätzlich ist für eine hohe Anbautoleranz in dieser Richtung eine Beleuchtung des Maßstabgitters 3 mit einem Strahlenbündel geringer Divergenz und einem kleinem Strahldurchmesser anzustreben. Da sich diese Größen bei einer vorgegebenen Wellenlänge nicht beliebig minimieren lassen, ist ein Kompromiss für die optimale Anordnung des Maßstabgitters 3 zu finden. Ein derartiger Kompromiss ergibt sich durch die Anordnung des Maßstabgitters 3 in der Strahltaille des emittierten bzw. umgeformten Strahlenbündels, wo das Produkt aus Divergenz und Strahldurchmesser der TEM 00 Mode eines Gauß'schen Strahles ein Minimum besitzt.

Das Maßstabgitter 3 bewirkt eine Aufspaltung des einfallenden Strahlenbündels in erste und zweite Teilstrahlenbündel (+1), (-1), die sich in unterschiedlichen Raumrichtungen ausbreiten, im vorliegenden Beispiel von der optischen Achse OA weg. In einem konkreten Ausführungsbeispiel der erfindungsgemäßen Positionsmesseinrichtung ist das Maßstabgitter 3 als beugendes Phasengitter ausgebildet, d.h. die ersten und zweiten Teilstrahlenbündel (+1), (-1) entsprechen den in die jeweiligen Raumrichtungen abgelenkten +/- 1. Beugungsordnungen. Das als Phasengitter ausgebildete Maßstabgitter 3 besitzt in einer bevorzugten Ausführungsform ein Steg-Lücke-Verhältnis $\eta_{MG}$ = 1:1 sowie einen Phasenhub $\varphi_{MG}$ = 180°.

Im dargestellten Beispiel der Figuren 1 - 3 ist das Maßstabgitter 3 als Durchlichtgitter ausgebildet, grundsätzlich ist es alternativ hierzu auch möglich, das Maßstabgitter 3 als reflektierendes Auflichtgitter auszubilden, wenn das Gesamtsystem im Auflicht betrieben werden soll.

Nach der erfolgten Aufspaltung am Maßstabgitter 3 treffen die ersten und zweiten Teilstrahlenbündel (+1), (-1) anschließend im Verlauf der Strahlausbreitung auf je ein Abtastgitter 4.1, 4.2, das im jeweiligen Teil-Strahlengang angeordnet ist. Die beiden Abtastgitter 4.1, 4.2 sind gemeinsam auf einer Abtastplatte 4 angeordnet. Die Abtastplatte 4 ist im Bereich außerhalb der Abtastgitter 4.1, 4.2 undurchlässig ausgebildet, was in Figur 1 durch die schwarz dargestellten Bereiche auf Seiten der Abtastplatte 4 verdeutlicht werden soll. Auf diese Art und Weise ist sichergestellt, dass lediglich die Teilstrahlenbündel (+1), (-1) respektive +/- 1. Beugungsordnungen, die vom Maßstabgitter 3 weg propagieren, zur Signalerzeugung beitragen. Im vorliegenden Fall handelt es sich hierbei ausschließlich um die +/- 1. Beugungsordnungen.

Über die Abtastgitter 4.1, 4.2 erfolgt wiederum eine Aufspaltung der jeweils darauf einfallenden ersten und zweiten Teilstrahlenbündel (+1), (-1). Das erste Teilstrahlenbündel (+1) wird durch das Abtastgitter 4.1 zumindest in ein drittes und viertes Teilstrahlenbündel aufgespalten, das zweite Teilstrahlenbündel (-1) wird über das Abtastgitter 4.2 zumindest in ein fünftes und sechstes Teilstrahlenbündel aufgespalten. Von den mindestens resultierenden vier aufgespaltenen Teilstrahlenbündeln treffen bzw. kreuzen sich zumindest zwei Teilstrahlenbündel (+1, -1), (-1, +1) wieder, da sie sich im vorliegenden Beispiel wieder zur optischen Achse OA hin ausbreiten, während die restlichen Teilstrahlenbündel in andere Raumrichtungen propagieren und nicht weiter zur Signalerzeugung beitragen. In der Darstellung der Figur 1 sind ab den Abtastgittern 4.,1, 4.2 lediglich die beiden Teilstrahlenbündel (+1, -1), (-1, +1) dargestellt, die sich wieder treffen und nachfolgend zur Erzeugung der verschiebungsabhängigen Abtastsignale genutzt werden.

In einer bevorzugten Ausführungsform sind auch die Abtastgitter 4.1, 4.2 als beugende Phasengitter ausgebildet, d.h. die von den beiden Abtastgittern 4.1, 4.2 aufgespaltenen dritten und vierten bzw. fünften und sechsten Teilstrahlenbündel entsprechen den +/-1. Beugungsordnungen. Neben zur Signalerzeugung genutzten Teilstrahlenbündeln (+1, -1), (-1, +1) ist in Figur 1 jeweils angegeben, welchen Beugungsordnungen an den verschiedenen Gittern diese Teilstrahlenbündel entsprechen.

Die als Abtastgitter 4.1, 4.2 genutzten Phasengitter besitzen ein Steg-Lücke-Verhältnis $\eta_{AG}$ = 1:1 sowie einen

Phasenhub $\varphi_{AG}$ = 180°; ferner ist die jeweilige Abtastgitter-Teilungsperiode $TP_{AG}$ kleiner als die Maßstabgitter-Teilungsperiode $TP_{MG}$ gewählt.

Im Fall einer Relativbewegung des ersten Objektes, das z.B. mit dem Maßstabgitter 3 verbunden ist, gegenüber dem zweiten Objekt, welches mit Lichtquelle 1 und Abtastgittern 4.1, 4.2 verbunden ist, resultiert in einer Detektionsebene D aus der Überlagerung der Teilstrahlenbündel (+1, -1) und (-1, +1) ein periodisch moduliertes Interferenzstreifenmuster mit einer definierten räumlichen Interferenzstreifenmuster-Periode $P_{IF}$. Aus der geeigneten Detektion dieses Interferenzstreifenmusters können die gewünschten verschiebungsabhängigen Abtastsignale gewonnen werden.

Bevor abschließend zur Erläuterung der vorliegenden Variante die Detektion der verschiebungsabhängigen Abtastsignale erläutert wird, sei nachfolgend auf weitere vorteilhafte Dimensionierungsregeln des Gesamtsystems eingegangen.

In diesem Zusammenhang ist zunächst eine erste Dimensionierungsregel für die geeignete Wahl der Abstände $a_1$ bzw. $a_2$ anzugeben. Mit $a_1$ wird der Abstand zwischen dem Maßstabgitter 3 und den Abtastgittern 4.1, 4.2 bezeichnet, mit $a_2$ der Abstand zwischen den Abtastgittern 4.1, 4.2 und der Detektionsebene D; bzgl. der Definition der verschiedenen Größen sei auch auf die Figur 1 verwiesen. In einer bevorzugten Variante der erfindungsgemäßen Positionsmesseinrichtung ist das Verhältnis der Abstände $a_1$ und $a_2$ gemäß folgender Gleichung (1) zu wählen:

$$\frac{a_2}{a_1} = 2\frac{P_{IF}}{TP_{MG}}\sqrt{\frac{1-(\lambda/TP_{MG})^2}{1-(\lambda/2P_{IF})^2}} \qquad \text{Gl. (1)}$$

Für die verwendeten Größen gilt hierbei:

$a_1$:= Abstand zwischen Maßstabgitter und Abtastgitter
$a_2$:= Abstand zwischen Abtastgitter und Detektionsebene
$TP_{MG}$ := Maßstabgitter-Teilungsperiode
$P_{IF}$ := Räumliche Streifenmuster-Periode in der Detektionsebene
$\lambda$ := Wellenlänge der Lichtquelle.

Durch die Wahl des Abstandes $a_1$ wird sichergestellt, dass zumindest die vom Maßstabgitter 3 aufgespaltenen ersten und zweiten Teilstrahlenbündel (+1), (-1) im Bereich der Abtastgitter 4.1, 4.2 räumlich getrennt voneinander vorliegen. Ferner ist durch eine derartige Wahl des Abstandes $a_1$ gewährleistet, dass i.w. nur die +/- 1. Beugungsordnungen zur Signalerzeugung beitragen, woraus wiederum nur geringfügig gestörte Abtastsignale resultieren, die insbesondere keine Oberwellenanteile besitzen.

Eine weitere Dimensionierungsvorschrift gibt die Größe der Abtastgitter-Teilungsperiode $TP_{AG}$ in Abhängigkeit anderer Größen an. Vorzugsweise ist die Abtastgitter-Teilungsperiode $TP_{AG}$ gemäß folgender Gleichung (2) zu wählen:

$$TP_{AG} = 1/(1/TP_{MG} + 1/2P_{IF}) \qquad \text{Gl. (2)}$$

Bezüglich der Bedeutung der verschiedenen Größen sei auf die obige Gl. (1) verwiesen.

Detektionsseitig ist in der ersten erläuterten Variante der erfindungsgemäßen Positionsmesseinrichtung vorgesehen, in der Detektionsebene D ein Detektionsgitter 5 anzuordnen, welches eine Aufspaltung des durch das Detektionsgitter 5 fallenden Lichtes in mindestens drei verschiedene Raumrichtungen bewirkt. Dem Detektionsgitter 5 im Abstand $a_3$ nachgeordnet sind detektionsseitig ferner mindestens drei optoelektronische Detektorelemente 6.1, 6.2, 6.3, die zur Erfassung bzw. Erzeugung phasenverschobener Abtastsignale $S_{0°}$, $S_{120°}$, $S_{240°}$ aus der Abtastung des Interferenzstreifenmusters in der Detektionsebene D dienen.

Das Detektionsgitter 5 ist wie die anderen verwendeten Gitter ebenfalls als beugendes Phasengitter ausgebildet, welches das einfallende Licht zumindest in drei Beugungsordnungen bzw. Raumrichtungen aufspaltet. In einer bevorzugten Ausführungsform ist eine Aufspaltung in die 0. Beugungsordnung, in die +/-1. Beugungsordnungen sowie in die +/- 2. Beugungsordnungen vorgesehen. Die in Richtung der drei Detektorelemente 6.1, 6.2, 6.3 propagierenden Teilstrahlenbündel sind in Figur 1 durch die Angabe der jeweils miteinander interferierenden Beugungsordnungen an den verschiedenen Gittern bezeichnet.

Das entsprechende Phasengitter der Detektionsteilung 5 besitzt vorzugsweise ein Steg-Lücke-Verhältnis $\eta_{DG}$ = 1:2 oder $\eta_{DG}$ = 2:1 sowie einen Phasenhub von 120° oder 240°. Ferner besitzt das Detektionsgitter 5 eine Detektionsgitter-Teilungsperiode ($TP_{DG}$), die der doppelten räumlichen Interferenzstreifenmuster-Periode ($P_{IF}$) entspricht. In Bezug auf die geeignete Ausgestaltung der Detektionsteilung 5 sei ferner ausdrücklich auf die offenbarten Maßnahmen in der EP 446 691 B1 verwiesen.

Aufgrund der genutzten Beugungsordnungen an den verschiedenen Gittern resultieren im Fall der Relativbewegung von Maßstabgitter 3 und Abtasteinheit auf Seiten der drei Detektorelemente 6.1, 6.2, 6.3 jeweils um 120° phasenversetzte Abtastsignale $S_{0°}$, $S_{120°}$, $S_{240°}$. Diese werden in bekannter Art und Weise über eine - nicht dargestellte - Folgeelektronik in ein Paar von Abtastsignalen umgesetzt, die einen Phasenversatz von 90° aufweisen.

Mithilfe dieser Variante der erfindungsgemäßen Vorrichtung lassen sich insbesondere sehr kleine Bauformen bei gleichzeitig hohem Modulationsgrad der Abtastsignale erzielen. Dies ist darauf zurückzuführen, dass die Größe $a_2$ sehr klein gewählt werden kann. Hinzu kommt, dass die Optik dieses Systems sich relativ einfach an verschiedenste geforderte Gitterkonstanten und Abtastabstände anpassen lässt.

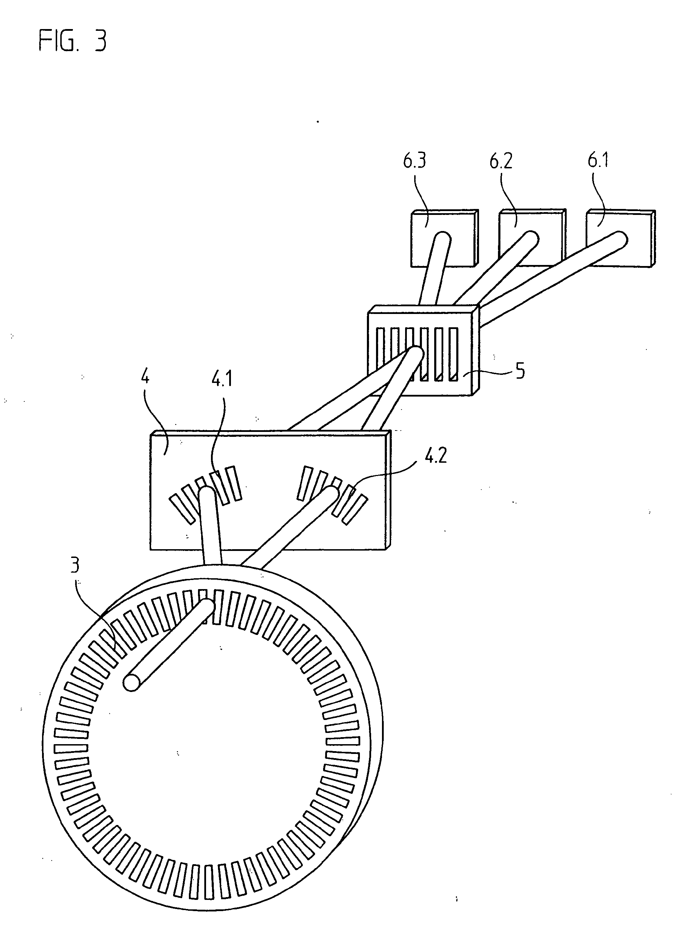

Eine konkrete Ausführungsform des prinzipiell anhand von Figur 1 erläuterten Systems, das insbesondere zur Erfassung rotatorischer Relativbewegungen um eine Rotationsachse R dient, ist in einer schematischen räumlichen Teil-Darstellung in Figur 3 gezeigt. Funktionsgleiche Komponenten haben in dieser Darstellung die gleichen Bezugszeichen wie in Figur 1.

Besonders vorteilhaft sind im Fall der rotatorischen Variante neben den bereits oben erwähnten Vorteilen der erfindungsgemäßen Positionsmesseinrichtung die resultierenden großen Anbautoleranzen des Maßstabgitters 3 bzw. der sog. Teilscheibe in radialer, tangentialer wie auch in axialer Richtung anzuführen.

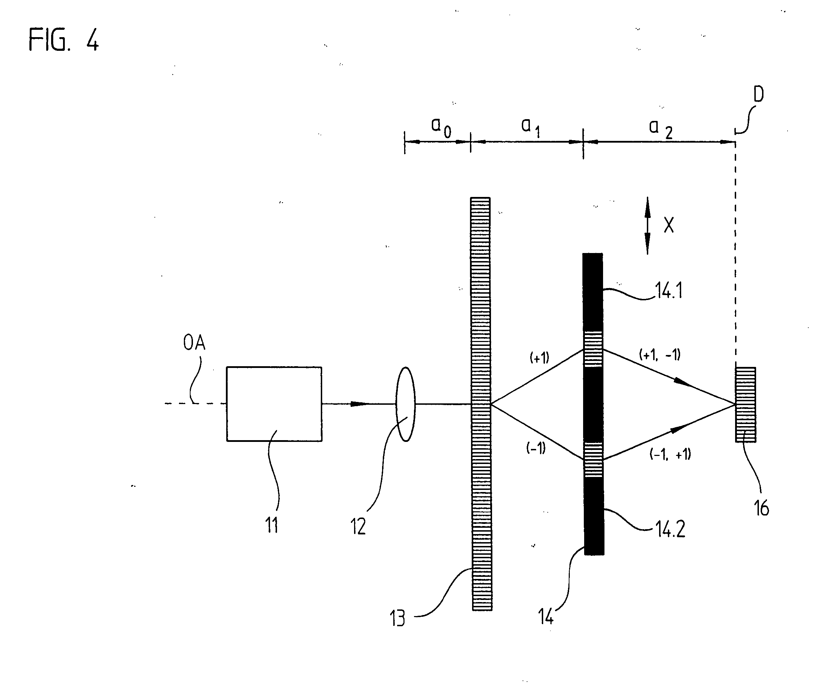

Eine weitere Variante einer erfindungsgemäßen Positionsmesseinrichtung wird nachfolgend anhand der Figuren 4 - 6 beschrieben. Hierbei wird im wesentlichen nur auf die entscheidenden Unterschiede zur ersten erläuterten Positionsmesseinrichtung eingegangen.

In Bezug auf die Erzeugung des im Fall der Relativbewegung periodisch modulierten Interferenzstreifenmusters in der Detektionsebene D entspricht diese Variante der ersten erläuterten Variante, d.h. über die Lichtquelle 11, das Optikelement 12, das Maßstabgitter 13 und die Abtastplatte 14 mit den Abtastgittern 14.1, 14.2 wird in der bereits oben erläuterten Art und Weise in der Detektionsebene D das zu detektierende periodisch modulierte Interferenzstreifenmuster erzeugt.

Detektionsseitig ist im Unterschied zu obiger Positionsmesseinrichtung nunmehr vorgesehen in der Detektionsebene eine periodische Detektoranordnung 16 zu platzieren, über die das periodisch modulierte Interferenzstreifenmuster erfasst und in phasenverschobene Abtastsignale ($S_{0°}$, $S_{90°}$, $S_{180°}$, $S_{270°}$) umgesetzt wird.

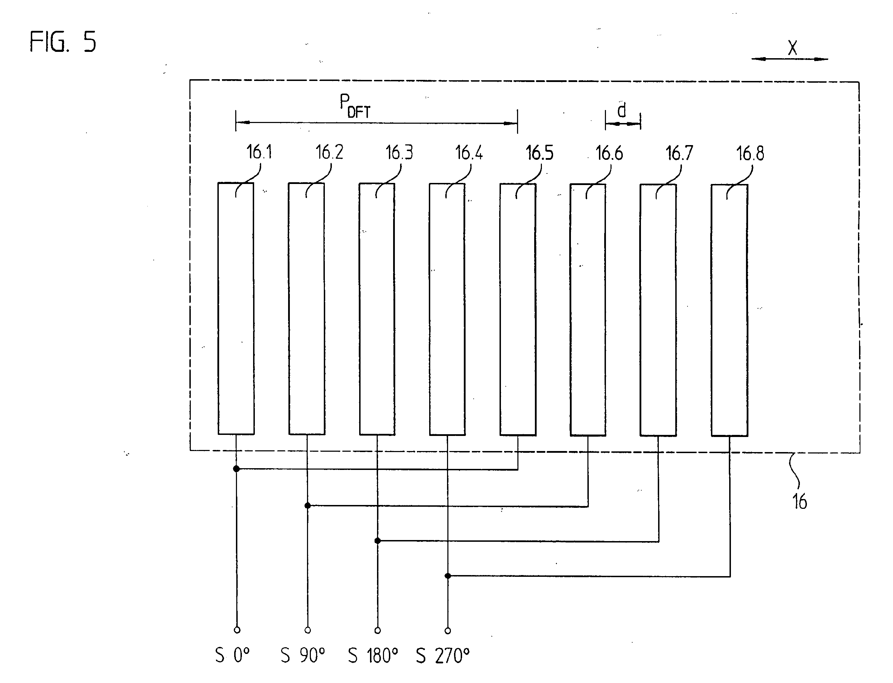

Zur näheren Erläuterung der periodischen Detektoranordnung 16, die in Figur 4 lediglich schematisiert angedeutet ist, sei auf die Figur 5 verwiesen, die einen Teil einer derartigen Detektoranordnung 16 in Draufsicht zeigt. Die periodische Detektoranordnung 16 umfasst eine Vielzahl von einzelnen optoelektronischen Detektorelementen 16.1, 16.2....., die benachbart zueinander in einem bestimmten Abstand d angeordnet sind. Aus der elektrisch leitenden Verbindung von Detektorelementen 16.1, 16.2,..., die phasengleiche Abtastsignale liefern, ergibt sich eine Detektorperiodizität $P_{DET}$ in Richtung x, d.h. das Detektorelement 16.1 liefert das phasengleiche Abtastsignal $S_0°$ wie auch das Detektorelement 16.5, das Detektorelement 16.2 liefert das phasengleiche Abtastsignal $S_{90°}$ wie auch das Detektorelement 16.6 usw..

Um ausgangsseitig die gewünschte Anzahl phasenversetzte Abtastsignale $S_{0°}$, $S_{90°}$, $S_{180°}$, $S_{270°}$ aus der Abtastung des periodisch modulierten Interferenzstreifenmusters zu erzeugen, ist es erforderlich, die Detektor-Periode $P_{DET}$ auf die räumliche Interferenzstreifenmuster-Periode $P_{IF}$ abzustimmen, d.h. die Detektor-Periodizität $P_{DET}$ entspricht vorzugsweise der räumlichen Interferenzstreifenmuster-Periode $P_{IF}$. Im vorliegenden Beispiel sollen ausgangsseitig insgesamt vier, um jeweils 90° phasenverschobene Abtastsignale $S_{0°}$, $S_{90°}$, $S_{180°}$, $S_{270°}$ erzeugt werden. Aus diesem Grund ist vorgesehen, innerhalb einer räumlichen Interferenzstreifenmusterperiode $P_{IF}$ jeweils insgesamt vier Detektorelemente 16.1,... anzuordnen und jeweils jedes fünfte Detektorelement, das dann phasengleiche Abtastsignale $S_{0°}$, $S_{90°}$, $S_{180°}$, $S_{270°}$ liefert, elektrisch leitend miteinander zu verbinden.

Selbstverständlich ist es möglich, dass die gesamte Detektoranordnung 16 mehr als die in Figur 5 angedeuteten acht Detektorelemente 16.1, 16.2, ..... umfasst. Ebenso kann grundsätzlich auch eine alternative Auslegung der Detektoranordnung 16 dahingehend realisiert werden, dass etwa andere Phasenbeziehungen der ausgangsseitigen Abtastsignale resultieren, z.B. drei um 120° phasenversetzte Abtastsignale etc..

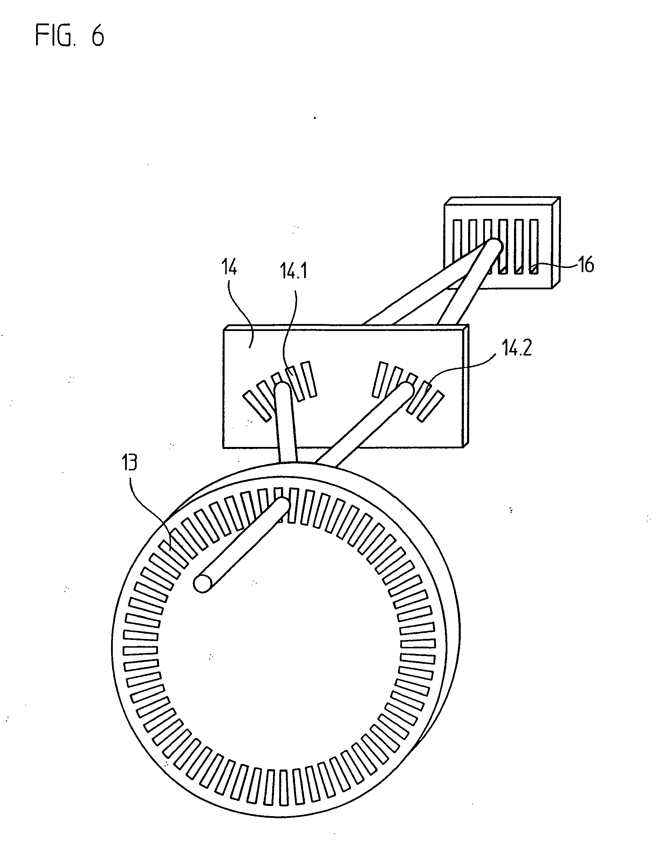

In Figur 6 ist analog zur Darstellung in Figur 3 schließlich eine räumliche Teildarstellung der zweiten erläuterten Variante der erfindungsgemäßen Positionsmesseinrichtung dargestellt, die wiederum insbesondere zur Erfassung rotatorischer Relativbewegungen um eine Rotationsachse R dient. Funktionsgleiche Elemente haben in dieser Darstellung die gleichen Bezugszeichen wie in Figur 3.

Alternativ zur dargestellten Detektions-Variante des zweiten Beispieles wäre es insbesondere im Fall besonders klein bauender System und daraus resultierenden kleinen räumlichen Interferenzstreifenmuster-Perioden $P_{IF}$ möglich, beispielsweise nicht alle vier Detektorelemente innerhalb einer Periode $P_{IF}$ anzuordnen; benachbarte Detektorelemente unterschiedlicher Phasenlage könnten alternativ hierzu auch im Abstand $d = P_{IF} + P_{IF}/4$ angeordnet werden etc..

Neben den erläuterten Alternativen existieren im Rahmen der vorliegenden Erfindung somit selbstverständlich noch weitere Ausgestaltungsmöglichkeiten. Beispielsweise sei in diesem auf die bereits oben erwähnte Variante einer linearen Positionsmesseinrichtung hingewiesen, die ein sich linear erstreckendes Maßstabgitter und entsprechend linear angeordnete Abtastgitter umfasst. Im Fall einer Auflichtvariante wäre alternativ zum erläuterten Beispiel ein Maßstabgitter zu verwenden, das in Reflexion genutzt wird etc..

**Patentansprüche**

1. Interferenzielle Positionsmesseinrichtung zur Bestimmung der Relativposition zweier Objekte, die in mindestens einer Messrichtung (x) zueinander beweglich sind, bestehend aus

 - einer Lichtquelle (1), die ein Strahlenbündel in Richtung einer optischen Achse (OA) emittiert,
 - einem der Lichtquelle (1) nachgeordneten Optikelement (2), das das von der Lichtquelle (1) emittierte Strahlenbündel umformt,
 - einem der Lichtquelle (1) nachgeordneten Maßstabgitter (3), das das einfallende Strahlenbündel zumindest in erste und zweite Teilstrahlenbündel (+1), (-1) aufspaltet, die sich in unterschiedlichen Raunmrichtungen ausbreiten,
 - je einem Abtastgitter (4.1, 4.2), angeordnet im Strahlengang der ersten und zweiten Teilstrahlenbündel (+1), (-1), wobei jedes Abtastgitter (4.1, 4.2) wieder eine Aufspaltung der ersten und zweiten Teilstrahlenbündel (+1), (-1) in dritte und vierte bzw. fünfte und sechste Teilstrahlenbündel bewirkt, von denen sich zumindest zwei Teilstrahlenbündel (+1, -1), (-1, +1) wieder treffen und wobei im Fall einer Relativbewegung des mit dem ersten Objekt verbundenen Maßstabgitters (3) gegenüber der mit dem zweiten Objekt verbundenen Lichtquelle (1) und Abtastgittern (4.1, 4.2) in einer Detektionsebene (D) ein periodisch moduliertes Interferenzstreifenmuster mit einer definierten räumlichen Interferenzstreifenmuster-Periode ($P_{IF}$) resultiert,
 - einem in der Detektionsebene angeordneten Detektionsgitter (5), welches eine Aufspaltung des durch das Detektionsgitter (5) fallenden Lichtes in mindestens drei verschiedene Raumrichtungen bewirkt und
 - in den mindestens drei Raumrichtungen angeordnete optoelektronische Detektorelemente (6.1, 6.2, 6.3) zur Erfassung phasenverschobener Abtastsignale ($S_{0°}$, $S_{120°}$, $S_{240°}$).

2. Interferenzielle Positionsmesseinrichtung zur Bestimmung der Relativposition zweier Objekte, die in mindestens einer Messrichtung (x) zueinander beweglich sind, bestehend aus

 - einer Lichtquelle (11), die ein Strahlenbündel in Richtung einer optischen Achse (OA) emittiert,
 - einem der Lichtquelle (11) nachgeordneten Optikelement (12), das das von der Lichtquelle (11) emittierte Strahlenbündel umformt,
 - einem der Lichtquelle (11) nachgeordneten Maßstabgitter (13), das das einfallende Strahlenbündel zumindest in erste und zweite Teilstrahlenbündel (+1), (-1) aufspaltet, die sich in unterschiedlichen Raumrichtungen ausbreiten,
 - je einem Abtastgitter (14.1, 14.2), angeordnet im Strahlengang der ersten und zweiten Teilstrahlenbündel (+1), (-1), wobei jedes Abtastgitter (14.1, 14.2) wieder eine Aufspaltung der ersten und zweiten Teilstrahlenbündel (+1), (-1) in dritte und vierte bzw. fünfte und sechste Teilstrahlenbündel bewirkt, von denen sich zumindest zwei Teilstrahlenbündel (+1, -1), (-1, +1) wieder treffen und wobei im Fall einer Relativbewegung des mit dem ersten Objekt verbundenen Maßstabgitters (13) gegenüber der mit dem zweiten Objekt verbundenen Lichtquelle (11) und Abtastgittern (14.1, 14.2) in einer Detektionsebene (D) ein periodisch moduliertes Interferenzstreifenmuster mit einer definierten räumlichen Interferenzstreifenmuster-Periode ($P_{IF}$) resultiert und
 - einer in der Detektionsebene (D) angeordneten periodischen Detektoranordnung (16) zur Erfassung phasenverschobener Abtastsignale ($S_{0°}$, $S_{90°}$, $S_{180°}$, $S_{270°}$), bestehend aus einer Vielzahl von einzelnen Detektorelementen (16.1...16.8), wobei die Detektor-Periode ($P_{DET}$) auf die räumliche Interferenzstreifenmuster-Periode ($P_{IF}$) abgestimmt ist.

3. Interferenzielle Positionsmesseinrichtung nach Anspruch 1 oder 2, wobei die Lichtquelle (1; 11) als Halbleiter-Lichtquelle ausgebildet ist.

4. Interferenzielle Positionsmesseinrichtung nach Anspruch 1 oder 2, wobei das Optikelement (2; 12) als Linse ausgebildet ist.

5. Interferenzielle Positionsmesseinrichtung nach Anspruch 1 oder 2, wobei das Maßstabgitter (3; 13) als Phasengitter ausgebildet ist, und die aufgespaltenen ersten und zweiten Teilstrahlenbündel (+1), (-1) den +/-1. Beugungsordnungen entsprechen.

6.  Interferenzielle Positionsmesseinrichtung nach Anspruch 4, wobei das Maßstabgitter (3; 13) als Phasengitter mit einem Steg-Lücke-Verhältnis $\eta_{MG}$ = 1:1 sowie einem Phasenhub $\varphi_{MG}$ = 180° ausgebildet ist.

7.  Interferenzielle Positionsmesseinrichtung nach Anspruch 1 oder 2, wobei die Abtastgitter (4.1, 4.2; 14.1, 14.2) als Phasengitter ausgebildet sind, und die aufgespaltenen dritten und vierten bzw. fünften und sechsten Teilstrahlenbündel jeweils den +/- 1. Beugungsordnungen entsprechen.

8.  Interferenzielle Positionsmesseinrichtung nach Anspruch 6, wobei die Abtastgitter (4.1, 4.2; 14.1, 14.2) als Phasengitter mit einem Steg-Lücke-Verhältnis $\eta_{AG}$ = 1:1 sowie einem Phasenhub $\varphi_{AG}$ = 180° ausgebildet sind und jeweils eine Abtastgitter-Teilungsperiode ($TP_{AG}$) besitzen, die kleiner als die Maßstabgitter-Teilungsperiode ($TP_{MG}$) ist.

9.  Interferenzielle Positionsmesseinrichtung nach Anspruch 1 oder 2, wobei die Abtastgitter (4.1, 4.2; 14.1, 14.2) auf einer Abtastplatte (4; 14) gemeinsam angeordnet sind.

10. Interferenzielle Positionsmesseinrichtung nach Anspruch 8, wobei die Abtastplatte (4; 14) außerhalb der Bereiche mit den Abtastgittern (4.1, 4.2; 14.1, 14.2) undurchlässig ausgebildet ist.

11. Interferenzielle Positionsmesseinrichtung nach Anspruch 1 oder 2, wobei die Abtastgitter (4.1, 4.2; 14.1, 14.2) in einem Abstand $a_1$ vom Maßstabgitter (3; 13) angeordnet sind, in der zumindest die vom Maßstabgitter (3; 13) aufgespaltenen ersten und zweiten Teilstrahlenbündel (+1), (-1) räumlich getrennt voneinander vorliegen.

12. Interferenzielle Positionsmesseinrichtung nach Anspruch 1 oder 2, wobei für den Abstand $a_1$ zwischen dem Maßstabgitter (3; 13) und den Abtastgittern (4.1, 4.2; 14.1, 14.2) und den Abstand $a_2$ zwischen den Abtastgittern (4.1, 4.2; 14.1, 14.2) und der Detektionsebene (D) gilt

$$\frac{a_2}{a_1} = 2 \frac{P_{IF}}{TP_{MG}} \sqrt{\frac{1-(\lambda/TP_{MG})^2}{1-(\lambda/2P_{IF})^2}} \,,$$

wobei

$a_1$ := Abstand zwischen Maßstabgitter und Abtastgitter
$a_2$ := Abstand zwischen Abtastgitter und Detektionsebene
$TP_{MG}$ := Maßstabgitter-Teilungsperiode
$P_{IF}$ := Räumliche Streifenmuster-Periode in der Detektionsebene
$\lambda$ := Wellenlänge der Lichtquelle.

13. Interferenzielle Positionsmesseinrichtung nach Anspruch 12, wobei für die Abtastgitter-Periode ($TP_{AG}$) gilt

$$TP_{AG} = 1/(1/TP_{MG} + 1/2P_{IF}) \,,$$

wobei
$TP_{AG}$ := Abtastgitter-Teilungsperiode.

14. Interferenzielle Positionsmesseinrichtung nach Anspruch 1 oder 2, wobei das Maßstabgitter (3) im Bereich der Strahltaille des vom Optikelement (2) umgeformten Strahlenbündels angeordnet ist.

15. Interferenzielle Positionsmesseinrichtung nach Anspruch 1, wobei das Detektionsgitter (5) als Phasengitter ausgebildet ist, welches einfallendes Licht zumindest in die 0. Beugungsordnung sowie in die +/- 2. Beugungsordnungen aufspaltet.

16. Interferenzielle Positionsmesseinrichtung nach Anspruch 15, wobei das Detektionsgitter (5) als Phasengitter mit einem Steg-Lücke-Verhältnis $\eta_{DG}$ = 1:2 oder $\eta_{DG}$ = 2:1 sowie einem Phasenhub von 120° oder 240° ausgebildet ist und eine Detektionsgitter-Teilungsperiode ($TP_{DG}$) besitzt, die der doppelten räumlichen Interferenzstreifenmuster-Periode ($P_{IF}$) entspricht.

**17.** Interferenzielle Positionsmesseinrichtung nach Anspruch 2, wobei die Detektor-Periode ($P_{DET}$) derart auf die räumliche Streifenmuster-Periode ($P_{IF}$) abgestimmt ist, dass benachbarte Detektorelemente (16.1,...16.8) jeweils um 90° phasenverschobene Abtastsignale ($S_{0°}$, $S_{90°}$, $S_{180°}$, $S_{270°}$) liefern.

**18.** Interferenzielle Positionsmesseinrichtung nach Anspruch 17, wobei innerhalb einer räumlichen Interferenzstreifenmuster-Periode ($P_{IF}$) vier Detektorelemente (16.1, ....16.8) angeordnet sind.

**19.** Interferenzielle Positionsmesseinrichtung nach Anspruch 2, wobei jeweils Detektorelemente (16.1,... 16.8) elektrisch leitend miteinander verbunden sind, die phasengleiche Abtastsignale ($S_{0°}$, $S_{90°}$, $S_{180°}$, $S_{270°}$) liefern.

**Claims**

1. Interferential position measuring device for determining the relative position of two objects which are movable towards each other in at least one measuring direction (x), comprising

   - a light source (1) which emits a beam in a direction of an optical axis (OA),
   - an optical element (2), arranged downstream of the light source (1), which reforms the beam emitted by the light source (1),
   - a scale grating (3), downstream of the light source (1), which splits the incident beam at least into first and second partial beams (+1), (-1) which propagate in different spatial directions,
   - one scanning grating (4.1, 4.2) each arranged in the beam path of the first and second partial beams (+1), (-1), each scanning grating (4.1, 4.2) in turn effecting a split of the first and second partial beams (+1), (-1) into third and fourth or fifth and sixth partial beams of which at least two partial beams (+1, -1), (-1, +1) are incident again, and in the case of a relative movement of the scale grating (3) connected to the first object in relation to the light source (1) connected to the second object and to scanning gratings (4.1, 4.2) in a detection plane (D) there being as a result a periodically modulated interference fringe pattern with a defined spatial interference fringe pattern period ($P_{IF}$),
   - a detection grating (5), arranged in the detection plane, which effects a splitting of the light falling through the detection grating (5) in at least three different spatial directions, and
   - optoelectronic detector elements (6.1, 6.2, 6.3), arranged in the at least three spatial directions, for detecting phase-shifted scanning signals ($S_{0°}$, $S_{120°}$, $S_{240°}$).

2. Interferential position measuring device for determining the relative position of two objects which are movable towards one another in at least one measuring direction (x), comprising

   - a light source (11) which emits a beam in a direction of an optical axis (OA),
   - an optical element (12), arranged downstream of the light source (11), which reforms the beam emitted by the light source (11),
   - a scale grating (13), downstream of the light source (11), which splits the incident beam at least into first and second partial beams (+1), (-1) which propagate in different spatial directions,
   - one scanning grating (14.1, 14.2) each arranged in the beam path of the first and second partial beams (+1), (-1), each scanning grating (14.1, 14.2) in turn effecting a split of the first and second partial beams (+1), (-1) into third and fourth or fifth and sixth partial beams of which at least two partial beams (+1, -1), (-1, +1) are incident again, and in the case of a relative movement of the scale grating (13) connected to the first object in relation to the light source (11) connected to the second object and to scanning gratings (14.1, 14.2) in a detection plane (D) there being as a result a periodically modulated interference fringe pattern with a defined spatial interference fringe pattern period ($P_{IF}$), and
   - a periodic detector arrangement (16), arranged in the detection plane (D), for detecting phase-shifted scanning signals ($S_{0°}$, $S_{90°}$, $S_{180°}$, $S_{270°}$), comprising a multiplicity of individual detector elements (16.1 ... 16.8), the detector period ($P_{DET}$) being tuned to the spatial interference fringe pattern period ($P_{TF}$).

3. Interferential position measuring device according to Claim 1 or 2, in which the light source (1; 11) is designed as a semiconductor light source.

4. Interferential position measuring device according to Claim 1 or 2, in which the optical element (2; 12) is designed as a lens.

5. Interferential position measuring device according to Claim 1 or 2, in which the scale grating (3; 13) is designed as a phase grating, and the split first and second partial beams (+1), (-1) correspond to the +/-1st diffraction orders.

6. Interferential position measuring device according to Claim 4, in which the scale grating (3; 13) is designed as a phase grating with a web/gap ratio $\eta_{MG}$ = 1:1 and a phase-angle deviation $\varphi_{MG}$ = 180°.

7. Interferential position measuring device according to Claim 1 or 2, in which the scanning gratings (4.1, 4.2; 14.1, 14.2) are designed as phase gratings, and the split third and fourth or fifth and sixth partial beams respectively correspond to the +/- 1st diffraction orders.

8. Interferential position measuring device according to Claim 6, in which the scanning gratings (4.1, 4.2; 14.1, 14.2) are designed as phase gratings with a web/gap ratio $\eta_{AG}$ = 1:1, and with a phase-angle deviation $\varphi_{AG}$ = 180°, and respectively have a scanning grating graduation period ($TP_{AG}$) which is smaller than the scale grating graduation period ($TP_{MG}$).

9. Interferential position measuring device according to Claim 1 or 2, in which the scanning gratings (4.1, 4.2; 14.1, 14.2) are arranged jointly on a scanning plate (4; 14).

10. Interferential position measuring device according to Claim 8, in which the scanning plate (4; 14) is designed to be impervious outside of the regions with the scanning gratings (4.1, 4.2; 14.1, 14.2).

11. Interferential position measuring device according to Claim 1 or 2, in which the scanning gratings (4.1, 4.2; 14.1, 14.2) are arranged at a distance $a_1$ from the scale grating (3; 13) at which at least the first and second partial beams (+1), (-1) split by the scale grating (3; 13) occur in a fashion spatially separated from one another.

12. Interferential position measuring device according to Claim 1 or 2, in which it holds for the distance $a_1$ between the scale grating (3; 13) and the scanning gratings (4.1, 4.2; 14.1, 14.2) and the distance $a_2$ between the scanning gratings (4.1, 4.2; 14.1, 14.2) and the detection plane (D) that
in which

$$\frac{a_2}{a_1} = 2\frac{P_{IF}}{TP_{MG}}\sqrt{\frac{1-(\lambda/TP_{MG})^2}{1-(\lambda/2P_{IF})^2}},$$

$a_1$: = distance between scale grating and scanning grating
$a_2$: = distance between scanning grating and detection plane
$TP_{MG}$: = scale grating graduation period
$P_{IF}$: = spatial fringe pattern period in the detection plane
$\lambda$: = wavelength of the light source.

13. Interferential position measuring device according to Claim 12, in which it holds for the scanning grating period ($TP_{AG}$) that

$$TP_{AG} = 1/(1/TP_{MG} + 1/2P_{IF}),$$

in which
$TP_{AG}$: = scanning grating graduation period.

**14.** Interferential position measuring device according to Claim 1 or 2, in which the scale grating (3) is arranged in the region of the beam waist of the beam transformer by the optical element (2).

**15.** Interferential position measuring device according to Claim 1, in which the detection grating (5) is designed as a phase grating which splits incident light at least into the 0th diffraction order and into the +/- 2nd diffraction orders.

**16.** Interferential position measuring device according to Claim 15, in which the detection grating (5) is designed as a phase grating with a web/gap ratio $\eta_{DG}$ = 1:2 or $\varphi_{DG}$ = 2:1 and a phase-angle deviation of 120° or 240°, and has a detection grating graduation period ($TP_{DG}$) which corresponds to twice the spatial interference fringe pattern period ($P_{IF}$).

**17.** Interferential position measuring device according to Claim 2, in which the detector period ($P_{DET}$) is tuned to the spatial fringe pattern period ($P_{IF}$) in such a way that adjacent detector elements (16.1, ... 16.8) respectively supply scanning signals ($S_{0°}$, $S_{90°}$, $S_{180°}$, $S_{270°}$) phase-shifted by 90°.

**18.** Interferential position measuring device according to Claim 17, in which four detector elements (16.1, ... 16.8) are arranged within a spatial interference fringe pattern period ($P_{IF}$).

**19.** Interferential position measuring device according to Claim 2, in which detector elements (16.1, ... 16.8) which supply in-phase scanning signals ($S_{0°}$, $S_{90°}$, $S_{180°}$, $S_{270°}$) are respectively connected to one another in an electrically conducting fashion.


**Revendications**

**1.** Dispositif interférentiel de mesure de position destiné à mesurer la position relative de deux objets qui sont mobiles l'un par rapport à l'autre dans au moins une direction de mesure (x), comprenant :

- une source de lumière (1) qui émet un faisceau de rayons dans la direction d'un axe optique (OA),
- un élément optique (2) disposé en aval de la source de lumière (1), qui met en forme le faisceau de rayons émis par la source de lumière (1),
- un réseau de mesure (3) disposé en aval de la source de lumière (1), qui décompose le faisceau de rayons incident en au moins des premier et deuxième faisceaux de rayons partiels (+1), (-1) se propageant dans des directions spatiales différentes,
- un réseau de balayage respectif (4.1, 4.2), disposé sur le chemin de faisceau des premier et deuxième faisceaux de rayons partiels (+1), (-1), dans lequel chaque réseau de balayage (4.1, 4.2) provoque de nouveau une division des premier et deuxième faisceaux de rayons partiels (+1), (-1) en des troisième et quatrième ou en des cinquième et sixième faisceaux de rayons partiels, parmi lesquels au moins deux faisceaux de rayons partiels (+1, -1), (-1, +1) se réunissent et dans lequel, dans le cas d'un mouvement relatif du réseau de mesure (3) relié au premier objet par rapport à la source de lumière (1) reliée au deuxième objet et à des réseaux de balayage (4.1, 4.2) dans un plan de détection (D), provoque un motif de franges d'interférence modulé périodiquement ayant une période spatiale de motif de franges d'interférence définie ($P_{IF}$),
- un réseau de détection (5) disposé dans le plan de détection, qui provoque une division de la lumière passant à travers le réseau de détection (5) dans au moins trois directions spatiales différentes et
- des éléments détecteurs optoélectroniques (6.1, 6.2, 6.3) disposés dans les au moins trois directions spatiales pour détecter des signaux de balayage déphasés ($S_{0°}$, $S_{120°}$, $S_{240°}$).

**2.** Dispositif interférentiel de mesure de position destiné à déterminer la position relative de deux objets qui sont mobiles l'un par rapport à l'autre dans au moins une direction de mesure (x), comprenant :

- une source de lumière (11) qui émet un faisceau de rayons dans la direction d'un axe optique (OA),
- un élément optique (12) disposé en aval de la source de lumière (11), qui met en forme le faisceau de rayons émis par la source de lumière (11),
- un réseau de mesure (13) disposé en aval de la source de lumière (11), qui décompose le faisceau de rayons incident en au moins des premier et deuxième faisceaux de rayons partiels (+1), (-1) se propageant dans des directions spatiales différentes,
- un réseau de balayage respectif (14.1, 14.2), disposé sur le chemin de faisceau des premier et deuxième faisceaux de rayons partiels (+1), (-1), dans lequel chaque réseau de balayage (14.1, 14.2) provoque de nouveau une division des premier et deuxième faisceaux de rayons partiels (+1), (-1) en des troisième et quatrième ou en des cinquième et sixième faisceaux de rayons partiels, parmi lesquels au moins deux faisceaux de rayons partiels (+1, -1), (-1, +1) se réunissent et dans lequel, dans le cas d'un mouvement relatif du réseau de mesure (13) relié au premier objet par rapport à la source de lumière (11) reliée au deuxième objet et à des réseaux de balayage (14.1, 14.2) dans un plan de détection (D), provoque un motif de franges d'interférence modulé périodiquement ayant une période spatiale de motif de franges d'interférence définie ($P_{IF}$), et

- un moyen de détection périodique (16) disposé dans le plan de détection (D), destiné à détecter des signaux de balayage déphasés ($S_{0°}$, $S_{90°}$, $S_{180°}$, $S_{270°}$), comprenant une pluralité d'éléments détecteurs individuels (16.1, ... 16.8), dans lequel la période de détecteur ($P_{BET}$) est accordée sur la période spatiale du motif de franges d'interférence ($P_{IF}$).

3. Dispositif interférentiel de mesure de position selon la revendication 1 ou 2, dans lequel la source de lumière (1 ; 11) est réalisée sous la forme d'une source de lumière à semi-conducteur.

4. Dispositif interférentiel de mesure de position selon la revendication 1 ou 2, dans lequel l'élément optique (2 ; 12) est réalisé sous la forme d'une lentille.

5. Dispositif interférentiel de mesure de position selon la revendication 1 ou 2, dans lequel le réseau de mesure (3 ; 13) est réalisé sous la forme d'un réseau de phase et dans lequel les premier et deuxième faisceaux de rayons partiels divisés (+1), (-1) correspondent aux ordres de diffraction +/-1.

6. Dispositif interférentiel de mesure de position selon la revendication 4, dans lequel le réseau de mesure (3 ; 13) est réalisé sous la forme d'un réseau de phase ayant un rapport crête à creux $\eta_{MG}$ = 1:1 ainsi qu'un écart de phase $\varphi_{MG}$ = 180°.

7. Dispositif interférentiel de mesure de position selon la revendication 1 ou 2, dans lequel les réseaux de balayage (4.1, 4.2 ; 14.1, 14.2) sont réalisés sous la forme de réseaux de phase et dans lequel les troisième et quatrième ou les cinquième et sixième faisceaux de rayons partiels divisés correspondent respectivement aux ordres de diffraction +/-1.

8. Dispositif interférentiel de mesure de position selon la revendication 6, dans lequel les réseaux de balayage (4.1, 4.2 ; 14.1, 14.2) sont réalisés sous la forme de réseaux de phase ayant un rapport crête à creux $\eta_{AG}$ = 1:1 ainsi qu'un écart de phase $\varphi_{AG}$ = 180° et qui possèdent une période de division de réseaux de balayage ($TP_{AG}$) qui est inférieure à la période de division des réseaux de mesure ($TP_{MG}$).

9. Dispositif interférentiel de mesure de position selon la revendication 1 ou 2, dans lequel les réseaux de balayage (4.1, 4.2 ; 14.1, 14.2) sont disposés en commun sur une plaque de balayage (4 ; 14).

10. Dispositif interférentiel de mesure de position selon la revendication 8, dans lequel la plaque de balayage (4 ; 14) est réalisée de manière à être opaque à l'extérieur de la région comportant les réseaux de balayage (4.1, 4.2 ; 14.1, 14.2).

11. Dispositif interférentiel de mesure de position selon la revendication 1 ou 2, dans lequel les réseaux de balayage (4.1, 4.2 ; 14.1, 14.2) sont disposés à une distance $a_1$ du réseau de mesure (3 ; 13), à laquelle se trouvent au moins les premier et deuxième faisceaux de rayons partiels (+1), (-1) séparés spatialement l'un de l'autre par le réseau de mesure (3 ; 13).

12. Dispositif interférentiel de mesure de position selon la revendication 1 ou 2, dans lequel, pour la distance $a_1$ entre le réseau de mesure (3 ; 13) et les réseaux de balayage (4.1, 4.2 ; 14.1, 14.2) et pour la distance $a_2$ entre les réseaux de balayage (4.1, 4.2 ; 14.1, 14.2) et le plan de détection (D), on a :

où

$$\frac{a_2}{a_1} = 2\,\frac{P_{IF}}{TP_{MG}}\sqrt{\frac{1-(\lambda\,/\,TP_{MG})^2}{1-(\lambda\,/\,2\,P_{IF})^2}}$$

$a_1$ = distance entre le réseau de mesure et le réseau de balayage,
$a_2$ = distance entre le réseau de mesure et le plan de détection,
$TP_{MG}$ = période de division du réseau de mesure,
$P_{IF}$ = période spatiale du motif de franges dans le plan de détection,
$\lambda$ = longueur d'onde de la source de lumière.

**13.** Dispositif interférentiel de mesure de position selon la revendication 12, dans lequel, pour la période du réseau de balayage ($TP_{AG}$), on a :

$$TP_{AG} = 1\,/\,(1\,/\,TP_{MG} + 1\,/\,2\,P_{IF})$$

où
$TP_{AG}$ = période de division du réseau de balayage.

**14.** Dispositif interférentiel de mesure de position selon la revendication 1 ou 2, dans lequel le réseau de mesure (3) est disposé dans la région de la taille de faisceau du faisceau de rayons mis en forme par l'élément optique (2).

**15.** Dispositif interférentiel de mesure de position selon la revendication 1, dans lequel le réseau de détection (5) est réalisé sous la forme d'un réseau de phase qui divise la lumière incidente en au moins l'ordre de diffraction 0 et en les ordres de diffraction +/-2.

**16.** Dispositif interférentiel de mesure de position selon la revendication 15, dans lequel le réseau de détection (5) est réalisé sous la forme d'un réseau de phase ayant un rapport crête à creux $\eta_{DG}$ = 1:2 ou $\eta_{DG}$ = 2:1 ainsi qu'un écart de phase de 120° ou de 240° et qui possède une période de division de réseau de détection ($TP_{DG}$) qui correspond au double de la période spatiale du motif de franges d'interférence ($P_{IF}$).

**17.** Dispositif interférentiel de mesure de position selon la revendication 2, dans lequel la période de détecteur ($P_{DET}$) est accordée à la période spatiale du motif de franges ($P_{IF}$) de manière à ce que des éléments détecteurs adjacents (16.1, ... 16.8) produisent respectivement des signaux de balayage déphasés de 90° ($S_{0°}$, $S_{90°}$, $S_{180°}$, $S_{270°}$).

**18.** Dispositif interférentiel de mesure de position selon la revendication 17, dans lequel quatre éléments détecteurs (16.1, ... 16.8) sont disposés à l'intérieur d'une période spatiale du motif de franges d'interférence ($P_{IF}$).

**19.** Dispositif interférentiel de mesure de position selon la revendication 2, dans lequel les éléments détecteurs respectifs (16.1, ... 16.8) sont électriquement connectés les uns aux autres et délivrent des signaux de balayage en phase ($S_{0°}$, $S_{90°}$, $S_{180°}$, $S_{270°}$).

FIG. 1

EP 1 396 704 B1

14

FIG. 2

EP 1 396 704 B1

FIG. 3

6.3   6.2   6.1

4   4.1

5

4.2

3

16

FIG. 4

FIG. 5

X

$P_{DFT}$

d

16.1  16.2  16.3  16.4  16.5  16.6  16.7  16.8

S 0°  S 90°  S 180°  S 270°

16

EP 1 396 704 B1

18

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6005667 A
- US 5574558 A
- EP 1085291 A2
- US 5079418 A

- US 5760959 A
- US 5812320 A
- EP 446691 B1

**In der Beschreibung aufgeführte Nicht-Patentliteratur**

- Dreigitterschrittgeber. **J.WILLHELM.** Dissertation. 1978, 47-52